# EUROPEAN PATENT APPLICATION

(11) **EP 4 535 350 A1**
(43) Date of publication of application: **09.04.2025**
(21) Application number: 23811421.9
(22) Date of filing: 24.03.2023
(51) Int. Cl.: G10L 17/02, G10L 17/22

(54) **AUTHENTICATION SYSTEM AND AUTHENTICATION METHOD**

(30) Priority: 27.05.2022 JP 2022086892
(71) Applicant: Panasonic Intellectual Property Management Co., Ltd., Kadoma-shi, Osaka 571-0057 (JP)
(72) Inventor: FUKUDA, Teppei, Kadoma-shi, Osaka 571-0057 (JP); FUJII, Ryota, Kadoma-shi, Osaka 571-0057 (JP); OKADA, Shintaro, Kadoma-shi, Osaka 571-0057 (JP)
(74) Representative: Eisenführ Speiser
(86) International application number: PCT/JP2023/012047
(87) International publication number: WO 2023/228542

(57) **Abstract**

The authentication system comprises: an acquisition unit that acquires an audio signal of a speaker's spoken voice; a detection unit that detects a first utterance interval spoken by the speaker from the audio signal and a second utterance interval spoken by the speaker from the audio signals of a database in which are registered audio signals of a plurality of speakers; a determination unit that compares a first audio signal of the first utterance interval and a second audio signal of the second utterance interval and determines authentication conditions for authentication using the first audio signal based on the length of the second audio signal of the second utterance interval or the number of sounds included in the second utterance interval; and an authentication unit that authenticates the speaker.

## Description

### TECHNICAL FIELD

The present disclosure relates to an authentication system and an authentication method.

### BACKGROUND ART

Patent Literature 1 discloses a communication device that registers voiceprint data for voiceprint authentication from a received voice during communication. The communication device acquires the received voice, acquires a telephone number of an utterance side, and extracts the voiceprint data from the acquired received voice. Next, the communication device measures an acquisition time of the received voice. The communication device determines whether a total acquisition time length of at least one piece of voiceprint data corresponding to a telephone number, which is in a telephone directory and is the same as the acquired telephone number, is longer than a time required for voiceprint collation. When determining that the total acquisition time of voiceprint data is longer than the time required for voiceprint collation, the communication device stores the acquired telephone number and the voiceprint data in association with each other in a storage unit.

### CITATION LIST

### PATENT LITERATURE

Patent Literature 1: JP2016-53598A

### SUMMARY OF INVENTION

### TECHNICAL PROBLEM

In Patent Literature 1, when the total acquisition time length of the voiceprint data of a speaker is equal to or larger than a predetermined value, the voiceprint data is registered in a database in association with the telephone number of the speaker. In other words, the communication device disclosed in Patent Literature 1 always requires a total acquisition time length of the voiceprint data for registration used for voiceprint authentication to be the equal to or larger than the predetermined value. For this reason, a user is required to utter for a time equal to or larger than the predetermined value to register the voiceprint data, and as a result, is also required to utter for a similar time during voiceprint authentication, and thus an improvement for improving convenience of the user is expected.

The present disclosure has been made in view of the above situation in the related art, and an object thereof is to determine an utterance time during authentication in accordance with a total time length of an utterance voice of a user acquired during registration, and improve convenience of the user.

### SOLUTION TO PROBLEM

The present disclosure provides an authentication system including: an acquisition unit configured to acquire a voice signal of an utterance voice of a speaker; a detection unit configured to detect a first utterance section during which the speaker is uttering from the acquired voice signal and a second utterance section during which the speaker is uttering from voice signals of a plurality of speakers registered in a database; a determination unit configured to collate a first voice signal of the first utterance section with a second voice signal of the second utterance section and determine an authentication condition for authentication using the first voice signal based on a length of the second voice signal of the second utterance section or the number of syllables included in the second utterance section; and an authentication unit configured to authenticate the speaker based on the determined authentication condition.

The present disclosure provides an authentication method performed by one or more computers, including: acquiring a voice signal of an utterance voice of a speaker; detecting a first utterance section during which the speaker is uttering from the acquired voice signal and a second utterance section during which the speaker is uttering from voice signals of a plurality of speakers registered in a database; collating a first voice signal of the first utterance section with a second voice signal of the second utterance section; determining an authentication condition for authentication using the first voice signal based on a length of the second voice signal of the second utterance section or the number of syllables included in the second utterance section; and authenticating the speaker based on the determined authentication condition.

These comprehensive or specific aspects may be implemented by a system, a device, a method, an integrated circuit, a computer program, or a recording medium, and may be implemented by any combination of the system, the device, the method, the integrated circuit, the computer program, and the recording medium.

### ADVANTAGEOUS EFFECTS OF INVENTION

According to the present disclosure, it is possible to determine an utterance time during authentication in accordance with a total time length of an utterance voice of a user acquired during registration, and improve convenience of the user.

### BRIEF DESCRIPTION OF DRAWINGS

[Fig. 1] Fig. 1 is a diagram illustrating an example of a use case of an authentication system according to the present embodiment.
[Fig. 2] Fig. 2 is a block diagram illustrating an internal configuration example of an authentication analysis device according to the present embodiment.
[Fig. 3] Fig. 3 illustrates a flowchart related to registration processing of an utterance voice signal for registration.
[Fig. 4] Fig. 4 is a diagram illustrating an example of setting authentication conditions based on an utterance length.
[Fig. 5] Fig. 5 is a diagram illustrating an example of setting the authentication conditions based on the utterance length and the number of syllables.
[Fig. 6] Fig. 6 is a diagram illustrating an example of setting an utterance content as the authentication condition according to the quality of a registration voice signal.
[Fig. 7] Fig. 7 is a diagram illustrating an example in which an operator performs authentication of identity verification based on an authentication text displayed on a screen.
[Fig. 8] Fig. 8 is a diagram illustrating an example of performing authentication of identity verification based on an identity verification text displayed on a user-side communication terminal.
[Fig. 9] Fig. 9 is a diagram illustrating an example of resetting a required time of the authentication conditions based on a measurement result of a voice collection condition during authentication after the authentication conditions are set.
[Fig. 10] Fig. 10 is a diagram illustrating an example of resetting a threshold value of the authentication conditions based on the measurement result of the voice collection condition during authentication after the authentication conditions are set.
[Fig. 11] Fig. 11 illustrates a flowchart of processing related to authentication of a speaker.
[Fig. 12] Fig. 12 is a diagram illustrating an example of setting a restriction on an operation after a successful authentication depending on the quality of the registration voice signal.
[Fig. 13] Fig. 13 illustrates a flowchart of processing of setting an operation restriction based on the quality of the registration voice signal.

### DESCRIPTION OF EMBODIMENTS

Hereinafter, embodiments that specifically disclose an authentication system and an authentication method according to the present disclosure will be described in detail with reference to the drawings as appropriate. However, unnecessarily detailed description may be omitted. For example, detailed description of already well-known matters and redundant description of substantially the same configuration may be omitted. This is to avoid unnecessary redundancy of the following description and to facilitate understanding of those skilled in the art. The accompanying drawings and the following description are provided for those skilled in the art to sufficiently understand the present disclosure, and are not intended to limit the subject matter described in the claims.

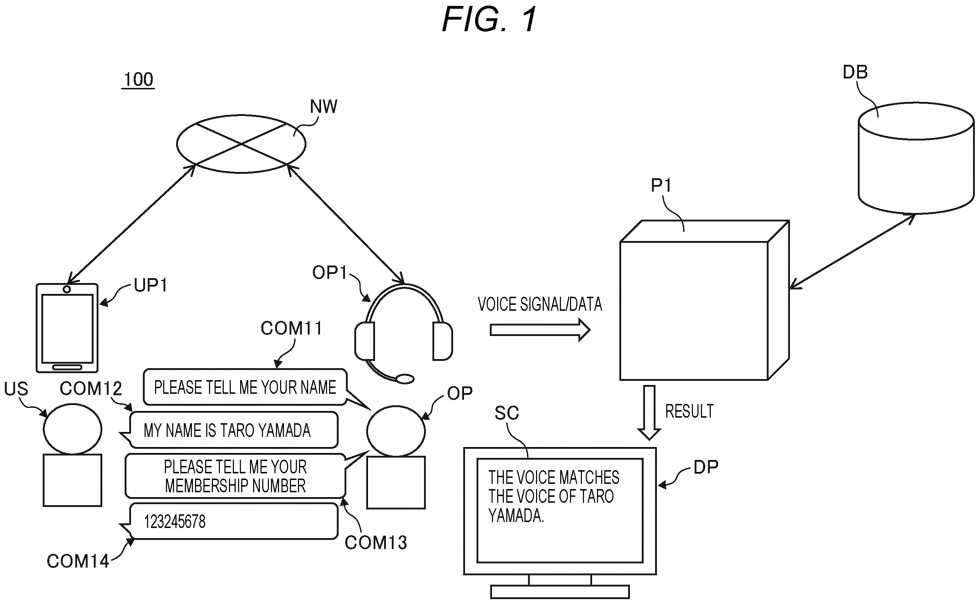

First, a use case of an authentication system according to the present embodiment will be described with reference to Fig. 1. Fig. 1 is a diagram illustrating an example of the use case of the authentication system according to the present embodiment. An authentication system 100 acquires a voice signal or voice data of a person (a user US in the example illustrated in Fig. 1) to be authenticated using a voice, and collates the acquired voice signal or voice data with a voice signal or voice data of a speaker registered (stored) in advance in a storage (a registered speaker database DB in the example illustrated in Fig. 1). Based on a collation result, the authentication system 100 evaluates a similarity between the voice signal or the voice data collected from the user US who is an authentication target and the voice data or the voice signal registered in the storage, and authenticates the user US based on the evaluated similarity.

The authentication system 100 according to a first embodiment includes an operator-side communication terminal OP1 as an example of a voice collection device, an authentication analysis device P1, the registered speaker database DB, and a display DP as an example of an output device. The authentication analysis device P1 may be integrated with the display DP. The operator-side communication terminal OP1 may be replaced with an automated voice device, and in this case, the automated voice device may be integrally with the authentication analysis device P1.

The authentication system 100 illustrated in Fig. 1 is an example that is used for authentication of a speaker (the user US) in a call center, and performs the authentication of the user US using the voice data obtained by collecting an utterance voice of the user US who is communicating with an operator OP. The authentication system 100 illustrated in Fig. 1 further includes a user-side communication terminal UP1 and a network NW. The overall configuration of the authentication system 100 is not limited to the example illustrated in Fig. 1 as a matter of course.

The user-side communication terminal UP1 is connected to the operator-side communication terminal OP1 via the network NW so as to be able to execute wireless communication. Here, the wireless communication is, for example, network communication via a wireless local area network (LAN) such as Wi-Fi (registered trademark).

The user-side communication terminal UP1 is implemented by, for example, a notebook PC, a tablet terminal, a smartphone, and a telephone. The user-side communication terminal UP1 is a voice collection device including a microphone (not illustrated), collects an utterance voice of the user US, converts the utterance voice into a voice signal, and transmits the converted voice signal to the operator-side communication terminal OP1 via the network NW. In addition, the user-side communication terminal UP1 acquires a voice signal of an utterance voice of the operator OP transmitted from the operator-side communication terminal OP1 and outputs the voice signal from a speaker (not illustrated).

The network NW is an internet protocol (IP) network or a telephone network, and connects the user-side communication terminal UP1 and the operator-side communication terminal OP1 so as to be able to transmit and receive voice signals. The transmission and reception of data are executed by wired communication or wireless communication.

The operator-side communication terminal OP1 is connected between the user-side communication terminal UP1 and the authentication analysis device P1 so as to be able to transmit and receive data by wired communication or wireless communication, and transmits and receives voice signals.

The operator-side communication terminal OP1 is implemented by, for example, a notebook PC, a tablet terminal, a smartphone, and a telephone. The operator-side communication terminal OP1 acquires a voice signal based on the utterance voice of the user US transmitted from the user-side communication terminal UP1 via the network NW, and transmits the voice signal to the authentication analysis device P1. In a case in which the operator-side communication terminal OP1 acquires voice signals including the acquired utterance voice of the user US and the acquired utterance voice of the operator OP, the operator-side communication terminal OP1 may separate the voice signal based on the utterance voice of the user US and the voice signal based on the utterance voice of the operator OP, on the basis of voice parameters such as a sound pressure level and a frequency band of the voice signals of the operator-side communication terminal OP1. The operator-side communication terminal OP1 extracts only the voice signal based on the utterance voice of the user US after the separation and transmits the extracted voice signal to the authentication analysis device P1.

The operator-side communication terminal OP1 may be connected to each of a plurality of user-side communication terminals so as to be able to execute communicate, and may simultaneously acquire a voice signal from each of the plurality of user-side communication terminals. The operator-side communication terminal OP1 transmits the acquired voice signal to the authentication analysis device P1. Accordingly, the authentication system 100 can execute voice authentication processing and voice analysis processing of each of a plurality of users at the same time.

In addition, the operator-side communication terminal OP1 may acquire a voice signal including an utterance voice of each of the plurality of users at the same time. The operator-side communication terminal OP1 extracts the voice signal for each user from the voice signals of the plurality of users acquired via the network NW, and transmits the voice signal for each user to the authentication analysis device P1. In such a case, the operator-side communication terminal OP1 may analyze the voice signals of the plurality of users, and separate and extract the voice signal for each user based on voice parameters such as a sound pressure level and a frequency band. In a case in which the voice signal is collected by an array microphone or the like, the operator-side communication terminal OP1 may separate and extract the voice signal for each user based on an arrival direction of the utterance voice. Accordingly, even when voice signals are collected in an environment in which a plurality of users utter at the same time, such as a Web conference, the authentication system 100 can execute voice authentication processing and voice analysis processing for each of the plurality of users.

The authentication analysis device P1 as an example of an authentication device and a computer is connected to the operator-side communication terminal OP1, the registered speaker database DB, and the display DP so as to be able to transmit and receive data. The authentication analysis device P1 may be connected to the operator-side communication terminal OP1, the registered speaker database DB, and the display DP via a network (not illustrated) so as to be able to execute wired communication or wireless communication.

The authentication analysis device P1 acquires the voice signal of the user US transmitted from the operator-side communication terminal OP1, and performs voice analysis on the acquired voice signal for each frequency, for example, to extract utterance feature data of the individual user US. The authentication analysis device P1 refers to the registered speaker database DB and collates utterance feature data of each of a plurality of users registered in advance in the registered speaker database DB with the extracted utterance feature data, thereby executing voice authentication of the user US. The authentication analysis device P1 generates an authentication result screen SC including an authentication result of the user US and transmits the authentication result screen SC to the display DP for output. The authentication result screen SC illustrated in Fig. 1 is an example, and is not limited thereto as a matter of course. The authentication result screen SC illustrated in Fig. 1 includes a message that "The voice matches the voice of Taro Yamada.", which is the authentication result of the user US.

The registered speaker database DB as an example of a database is a so-called storage, and is implemented by a storage medium such as a flash memory, a hard disk drive (HDD), or a solid state drive (SSD). The registered speaker database DB stores (registers) user information and the utterance feature data of the plurality of users in association with each other. Here, the user information is information related to the user, and is, for example, a user name, a user identification (ID), or identification information assigned to each user. The registered speaker database DB may be integrated with the authentication analysis device P1.

The display DP is implemented by, for example, a liquid crystal display (LCD) or an organic electroluminescence (EL) display, and displays the authentication result screen SC transmitted from the authentication analysis device P1. The display DP may be integrated with the authentication analysis device P1.

In the example illustrated in Fig. 1, the user-side communication terminal UP1 collects an utterance voice COM12 that "My name is Taro Yamada" of the user US and an utterance voice COM14 of "123245678" of the user US, converts the collected utterance voices into voice signals, and transmits the voice signals to the operator-side communication terminal OP1. The operator-side communication terminal OP1 transmits the voice signal based on each of the utterance voices COM12 and COM14 of the user US transmitted from the user-side communication terminal UP1 to the authentication analysis device P1.

In a case in which the operator-side communication terminal OP1 acquires voice signals obtained by collecting an utterance voice COM11 that "Please tell me your name", and an utterance voice COM13 that "Please tell me your membership number" of the operator OP, the utterance voice COM12, and the utterance voice COM14 of the user US, the operator-side communication terminal OP1 separates and removes a voice signal based on each of the utterance voice COM11 and the utterance voice COM13 of the operator OP, extracts only the voice signal based on each of the utterance voice COM12 and the utterance voice COM14 of the user US, and transmits the voice signal to the authentication analysis device P1. Accordingly, the authentication analysis device P1 can improve user authentication accuracy by using only a voice signal of an authentication target.

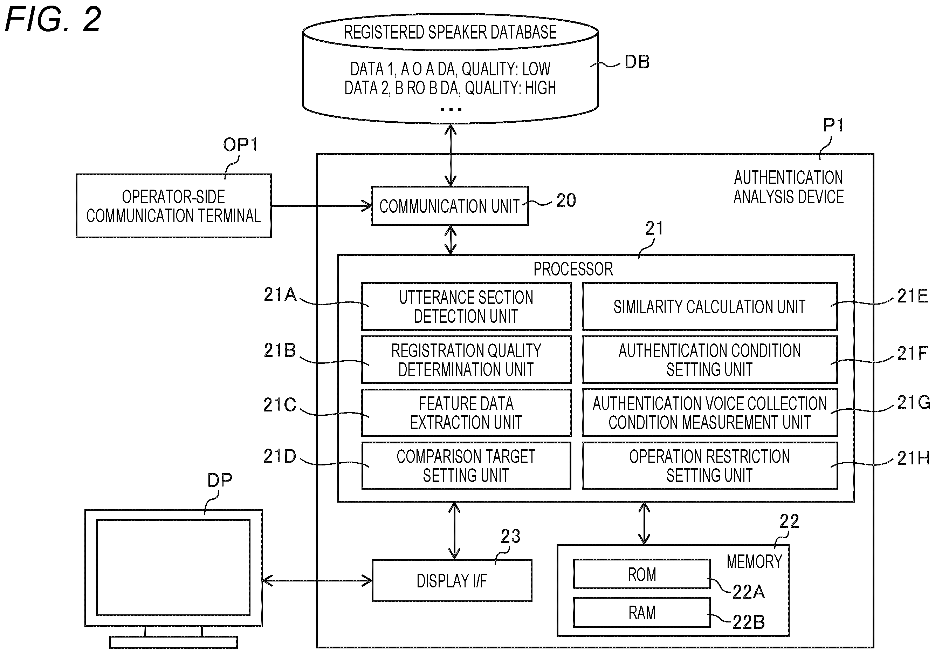

Next, an internal configuration example of the authentication analysis device according to the present embodiment will be described with reference to Fig. 2. Fig. 2 is a block diagram illustrating the internal configuration example of the authentication analysis device according to the present embodiment. The authentication analysis device P1 includes at least a communication unit 20, a processor 21, and a memory 22.

The communication unit 20 is connected to each of the operator-side communication terminal OP1 and the registered speaker database DB so as to be able to execute data communication. The communication unit 20 outputs a voice signal transmitted from the operator-side communication terminal OP1 to the processor 21.

The processor 21 is implemented by a semi-conductor chip on which at least one of electronic devices such as a central processing unit (CPU), a digital signal processor (DSP), a graphical processing unit (GPU), and a field programmable gate array (FPGA) is mounted. The processor 21 functions as a controller that controls an overall operation of the authentication analysis device P1, and executes control processing for controlling an operation of each part of the authentication analysis device P1, data input and output processing between each part of the authentication analysis device P1, data calculation processing, and data storage processing.

The processor 21 uses programs and data stored in a read only memory (ROM) 22A of the memory 22 to implement functions of an utterance section detection unit 21A, a registration quality determination unit 21B, a feature data extraction unit 21C, a comparison target setting unit 21D, a similarity calculation unit 21E, an authentication condition setting unit 21F, an authentication voice collection condition measurement unit 21G, and an operation restriction setting unit 21H. The processor 21 uses a random access memory (RAM) 22B of the memory 22 during operation to temporarily store, in the RAM 22B of the memory 22, data or information generated or acquired by the processor 21 and each unit.

The utterance section detection unit 21A as an example of a detection unit acquires a voice signal of an utterance voice during authentication (hereinafter, referred to as an "utterance voice signal"), analyzes the acquired utterance voice signal, and detects an utterance section (hereinafter, referred to as a first utterance section) during which the user US is uttering. The utterance section detection unit 21A outputs an utterance voice signal (hereinafter, referred to as a first voice signal) corresponding to at least one first utterance section detected from the utterance voice signal to the feature data extraction unit 21C. In addition, the utterance section detection unit 21A may temporarily store the first voice signal of the at least one first utterance section in the RAM 22B of the memory 22. When a plurality of first utterance sections are detected, the utterance section detection unit 21A may connect the first voice signal of each of the detected first utterance sections and output the connected first voice signals to the feature data extraction unit 21C. The utterance section detection unit 21A detects an utterance section (hereinafter, referred to as a second utterance section) of voice data acquired from the user US when an utterance voice signal used for authenticating the user US is registered in advance. The utterance section detection unit 21A outputs an utterance voice signal corresponding to the second utterance section (hereinafter, referred to as a second voice signal) to the registration quality determination unit 21B. When there are a plurality of second utterance sections, the utterance section detection unit 21A may connect the second voice signal of each of the detected second utterance sections and output the connected second voice signals to the registration quality determination unit 21B.

The registration quality determination unit 21B as an example of a processing unit acquires, from the utterance section detection unit 21A, the second voice signal of the second utterance section or the connected second voice signals of the plurality of second utterance sections. The registration quality determination unit 21B determines the quality of the acquired second voice signal. The quality is an index indicating the quality of a surrounding environment of a user during registration, or an utterance accuracy of the user during registration, or both when the second voice signal is registered in the registered speaker database DB for each user prior to actual authentication (during registration). In the present embodiment, authentication conditions (described later) imposed on the user during actual authentication are determined based on the quality during registration. The registration quality determination unit 21B determines the quality based on, for example, a length of the utterance of the second voice signal (hereinafter, referred to as an utterance length), or the number of syllables included in the second voice signal. The element used for the registration quality determination unit 21B to determine the quality is not limited to the utterance length and the number of syllables, and the number of phonemes or the number of words may be used. The registration quality determination unit 21B outputs information on the determined quality to the feature data extraction unit 21C or the authentication condition setting unit 21F.

The feature data extraction unit 21C as an example of a processing unit analyzes a feature of an individual voice for, for example, each frequency using one or more utterance voice signals extracted by the utterance section detection unit 21A, and extracts utterance feature data. The feature data extraction unit 21C extracts utterance feature data of the first voice signal of the first utterance section output from the utterance section detection unit 21A. The feature data extraction unit 21C extracts utterance feature data of the second voice signal of the second utterance section output from the utterance section detection unit 21A. The utterance feature data of the second voice signal of the second utterance section may be registered in advance in the registered speaker database DB. The feature data extraction unit 21C outputs the extracted utterance feature data of the first utterance section and the first voice signal from which the utterance feature data is extracted in an associated manner to the similarity calculation unit 21E or the comparison target setting unit 21D, or temporarily stores the utterance feature data and the first voice signal in an associated manner in the RAM 22B of the memory 22. The feature data extraction unit 21C outputs the utterance feature data of the second utterance section and the second voice signal from which the utterance feature data is extracted in an associated manner to the similarity calculation unit 21E, or temporarily stores the utterance feature data of the second utterance section and information on the quality acquired from the registration quality determination unit 21B in an associated manner in the RAM 22B of the memory 22.

The feature data extraction unit 21C performs voice recognition on an utterance content of the utterance voice signal. The voice recognition method of the utterance content can be realized by a known technique, for example, a phonemic analysis of the utterance voice signal may be performed to calculate language information, or other analysis methods may be used.

The comparison target setting unit 21D as an example of a setting unit acquires data of the user US who is a speaker from the registered speaker database DB. The data of the user US is, for example, at least one of personal information such as the date of birth, the name, or the gender of the user US, or voice data or feature data of the voice data related to an utterance previously registered by the user US. To set the speaker as the user US, the comparison target setting unit 21D may, for example, specify the speaker as the user US by using the extracted feature data of the speaker output from the feature data extraction unit 21C, or may specify the speaker as the user US from a content (for example, a name or an ID) input by the speaker to the user-side communication terminal UP1. The comparison target setting unit 21D outputs the acquired data of the user US to the utterance section detection unit 21A or the similarity calculation unit 21E.

The similarity calculation unit 21E as an example of an authentication unit acquires the utterance feature data of the utterance voice signal output from the feature data extraction unit 21C. The similarity calculation unit 21E calculates a similarity between the utterance feature data of the first utterance section and the utterance feature data of the second utterance section acquired from the feature data extraction unit 21C. The similarity calculation unit 21E specifies a user corresponding to the utterance voice signals (that is, the voice signals transmitted from the user-side communication terminal UP1) based on the calculated similarity to execute authentication of identity verification of the user.

The authentication condition setting unit 21F as an example of a determination unit sets the authentication condition based on the information on the quality acquired from the registration quality determination unit 21B. The authentication condition includes, for example, an utterance length or an utterance content of the user US, or a threshold value related to determination. The authentication condition is not limited thereto.

The authentication voice collection condition measurement unit 21G as an example of a measurement unit measures voice collection conditions during authentication. The voice collection conditions include, for example, the noise, the volume, and the degree of reverberation of an utterance voice signal collected during authentication, or the number of phonemes included in the utterance voice signal. The voice collection conditions are not limited thereto. The authentication voice collection condition measurement unit 21G outputs the measured voice collection conditions to the authentication condition setting unit 21F.

The operation restriction setting unit 21H as an example of a setting unit sets, based on the quality of the utterance voice signal of the second utterance section, a restriction on an operation allowed to be performed by the user US. For example, when the authentication system 100 is installed in an automated teller machine (ATM), the operation restriction setting unit 21H restricts operations such as remittance or transfer if the quality of the utterance voice signal is poor. An example of a machine in which the authentication system 100 is installed is not limited to the ATM.

Accordingly, the processor 21 sets the authentication condition during authentication of the identity verification of the user based on the quality of the second voice signal determined by the registration quality determination unit 21B. The processor 21 acquires the utterance voice signal of the user based on the set authentication condition. The processor 21 authenticates whether the speaker is the person himself/herself based on the collation between the first voice signal of the first utterance section and the second voice signal of the second utterance section detected by the utterance section detection unit 21A.

The memory 22 includes at least the ROM 22A that stores, for example, a program that defines various kinds of processing executed by the processor 21 and data used during execution of the program, and the RAM 22B serving as a work memory used when various kinds of processing executed by the processor 21 are executed. In the ROM 22A, the program that defines various kinds of processing executed by the processor 21 and the data used during execution of the program are written. The RAM 22B temporarily stores data or information (for example, utterance voice signals or utterance feature data corresponding to each utterance voice signal) generated or acquired by the processor 21.

A display I/F 23 connects the processor 21 and the display DP so as to be able to execute data communication, and outputs the authentication result screen SC generated by the similarity calculation unit 21E of the processor 21 to the display DP. The display I/F 23 causes the display DP to display an authentication status indicating whether the speaker is the person himself/herself based on an authentication result of the processor 21.

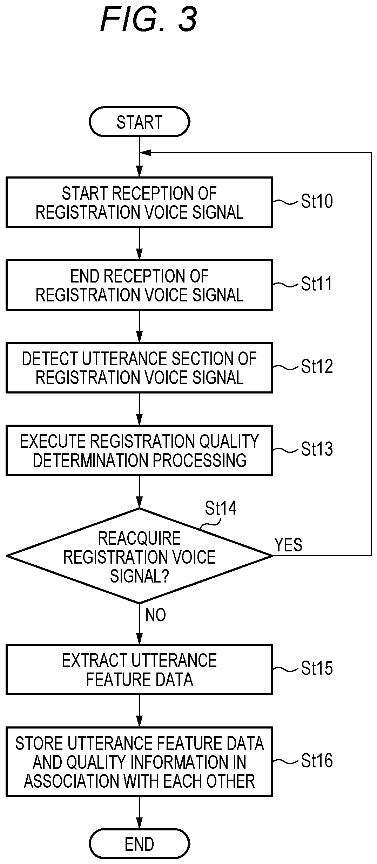

Next, registration processing of the utterance voice signal for registration will be described with reference to Fig. 3. Fig. 3 illustrates a flowchart related to registration processing of the utterance voice signal for registration. Each processing according to the flowchart illustrated in Fig. 3 is executed by the processor 21.

The flowchart illustrated in Fig. 3 illustrates processing during registration, that is processing related to registration of an utterance voice signal to be stored in advance in the registered speaker database DB.

The processor 21 starts reception of an utterance voice signal for registration (hereinafter, referred to as a registration voice signal) from a speaker (St10). That is, in the processing of step St10, the speaker starts uttering to the user-side communication terminal UP1.

The processor 21 ends the reception of the registration voice signal from the speaker (St11). That is, in the processing of step St11, the speaker ends uttering to the user-side communication terminal UP1.

The utterance section detection unit 21A detects a second utterance section of the registration voice signal acquired in the processing from step St10 to step St11 (St12).

The registration quality determination unit 21B determines the quality of a second voice signal of the second utterance section detected in the processing of step St12 (St13).

The registration quality determination unit 21B determines whether to reacquire a registration voice signal based on the quality determined in the processing of step St13 (St14). For example, the registration quality determination unit 21B determines not to reacquire a registration voice signal if the quality is equal to or larger than a predetermined minimum required value, and determines to reacquire a registration voice signal if the quality is less than the predetermined minimum required value. For example, if the speaker does not utter a single word, an utterance length is one second, or the number of syllables is one, the registration quality determination unit 21B determines to reacquire a registration voice signal. The examples in which the registration quality determination unit 21B determines to reacquire a registration voice signal are examples, and are not limited thereto. The processing of step St14 may be omitted from the processing of the flowchart illustrated in Fig. 3.

When the registration quality determination unit 21B determines to reacquire a registration voice signal (St14, YES), the processing of the processor 21 returns to the processing of step St10.

When the registration quality determination unit 21B determines not to reacquire a registration voice signal (St14, NO), the feature data extraction unit 21C extracts utterance feature data of the utterance voice signal of the second utterance section (St15).

The feature data extraction unit 21C stores the quality determined in the processing of step St13 and the utterance feature data extracted in the processing of step St15 in the registered speaker database DB in association with each other (St16).

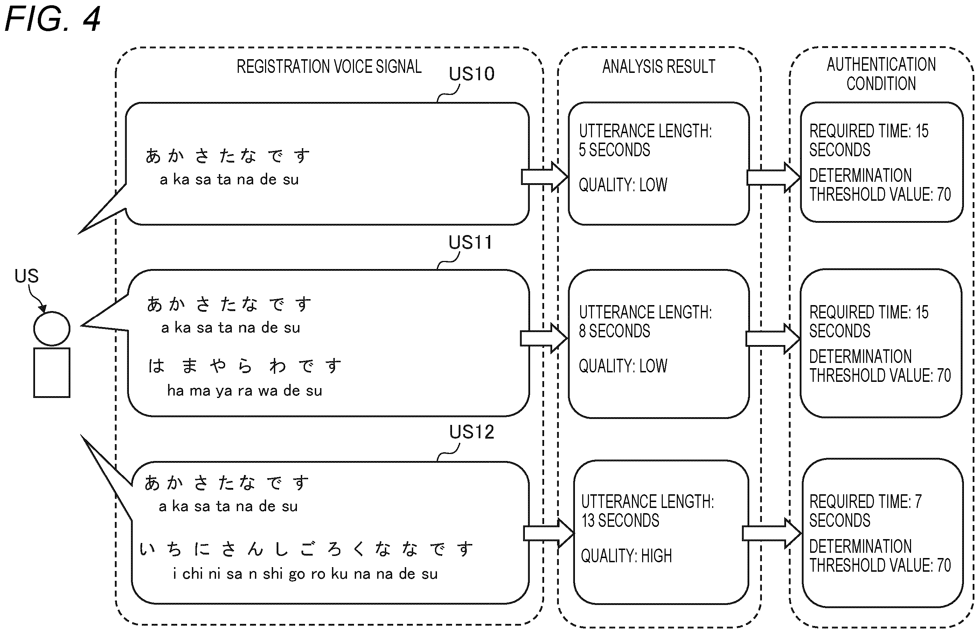

Next, an example of setting the authentication conditions based on the utterance length will be described with reference to Fig. 4. Fig. 4 is a diagram illustrating an example of setting the authentication conditions based on the utterance length.

A registration voice signal US10, a registration voice signal US11, and a registration voice signal US12 are registration voice signals of the user US registered in the registered speaker database DB in the processing illustrated in Fig. 3.

In the example illustrated in Fig. 4, when the utterance length is less than 10 seconds, the quality is "low", and when the utterance length is 10 seconds or more, the quality is "high". The number of seconds serving as a threshold value for determining the quality to be "low" or "high" is an example and is not limited thereto. The quality is not limited to two stages of "low" and "high", and may be set to three stages of "low", "medium", and "high" or four or more stages, for example.

The authentication condition setting unit 21F changes a required time based on the quality result. In the example illustrated in Fig. 4, when the quality is "low", the required time is 15 seconds, and when the quality is "high", the required time is 7 seconds. The required time is a total utterance time required of the speaker when the authentication system 100 performs authentication. The length of the required time is an example, and is not limited thereto. In the example illustrated in Fig. 4, a determination threshold value is always set to 70 regardless of the quality result. The determination threshold value is a threshold value used by the similarity calculation unit 21E to determine the similarity between the utterance feature data of the first utterance section and the utterance feature data of the second utterance section. The higher the determination threshold value, the higher the similarity required. The value of the determination threshold value is an example and is not limited to 70.

An utterance content of the registration voice signal US10 is "a ka sa ta na de su", and an utterance length is 5 seconds. Since the utterance length of the registration voice signal US10 is 5 seconds and less than 10 seconds, the quality is "low". As a result, the authentication conditions according to the registration voice signal US10 include a required time of 15 seconds and a determination threshold value of 70.

An utterance content of the registration voice signal US11 is "a ka sa ta na de su ha ma ya ra wa de su", and an utterance length is 8 seconds. Since the utterance length of the registration voice signal US11 is 8 seconds and less than 10 seconds, the quality is "low". As a result, the authentication conditions according to the registration voice signal US11 include a required time of 15 seconds and a determination threshold value of 70.

An utterance content of the registration voice signal US12 is "a ka sa ta na de su i chi ni sa n shi go ro ku na na de su", and an utterance length is 13 seconds. Since the utterance length of the registration voice signal US12 is 13 seconds and is equal to or larger than 10 seconds or more, the quality is "high". As a result, the authentication conditions according to the registration voice signal US12 include a required time of 7 seconds and a determination threshold value of 70.

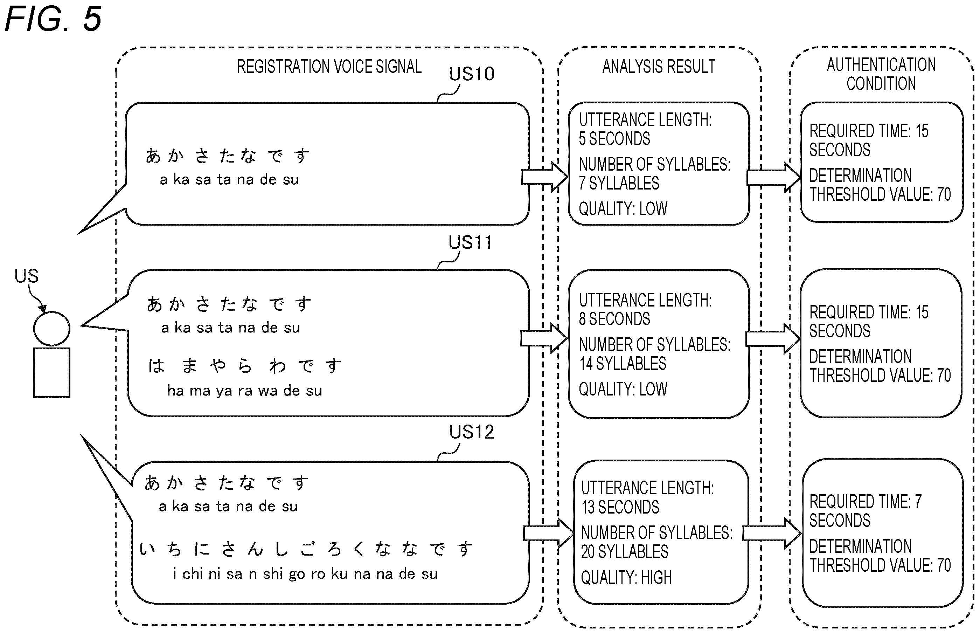

Next, an example of setting the authentication conditions based on the utterance length and the number of syllables will be described with reference to Fig. 5. Fig. 5 is a diagram illustrating an example of setting the authentication conditions based on the utterance length and the number of syllables.

In the example illustrated in Fig. 5, when the utterance length is less than 10 seconds, the quality is "low", and when the utterance length is 10 seconds or more, the quality is "high". When the number of syllables is less than 13 syllables, the quality is "low", and when the number of syllables is 13 syllables or more, the quality is "high". The number of seconds and the number of syllables serving as threshold values for determining the quality to be "low" or "high" are examples and are not limited thereto. The quality is not limited to "low" and "high", and may be set to three stages of "low", "medium", and "high" or four or more stages.

The authentication condition setting unit 21F changes the required time based on the qualities determined based on the utterance length and the number of syllables. Among the qualities determined based on the utterance length and the number of syllables, a lower quality is determined to be the quality of the registration voice signal. In the example illustrated in Fig. 5, when the quality is "low", the required time is 15 seconds, and when the quality is "high", the required time is 7 seconds. The length of the required time is an example, and is not limited thereto. In the example illustrated in Fig. 5, the determination threshold value is always set to 70 regardless of the quality result.

The utterance content of the registration voice signal US10 is "a ka sa ta na de su", and the number of syllables is 7 syllables. Since the utterance length of the registration voice signal US10 is 5 seconds and less than 10 seconds, the quality according to the utterance length is "low". Since the number of syllables is 7 syllables and less than 13 syllables, the quality according to the number of syllables is "low". The qualities according to the utterance length and the number of syllables are both "low", and thus the quality of the registration voice signal US10 is "low". As a result, the authentication conditions according to the registration voice signal US10 include a required time of 15 seconds and a determination threshold value of 70.

The utterance content of the registration voice signal US11 is "a ka sa ta na de su ha ma ya ra wa de su", and the number of syllables is 14 syllables. Since the utterance length of the registration voice signal US11 is 8 seconds and less than 10 seconds, the quality according to the utterance length is "low". Since the number of syllables is 14 syllables and is equal to or larger than 13 syllables, the quality according to the number of syllables is "high". The quality according to the number of syllables is "high" but the quality according to the utterance length is "low", and thus the quality of the registration voice signal US11 is "low". As a result, the authentication conditions according to the registration voice signal US11 include a required time of 15 seconds and a determination threshold value of 70.

The utterance content of the registration voice signal US12 is "a ka sa ta na de su i chi ni sa n shi go ro ku na na de su", and the number of syllables is 20 syllables. Since the utterance length of the registration voice signal US12 is 13 seconds and is equal to or larger than 10 seconds, the quality according to the utterance length is "high". Since the number of syllables is 20 syllables and is equal to or larger than 13 syllables, the quality according to the number of syllables is "high". The qualities according to the utterance length and the number of syllables are both "high", and thus the quality of the registration voice signal US12 is "high". As a result, the authentication conditions according to the registration voice signal US12 include a required time of 7 seconds and a determination threshold value of 70.

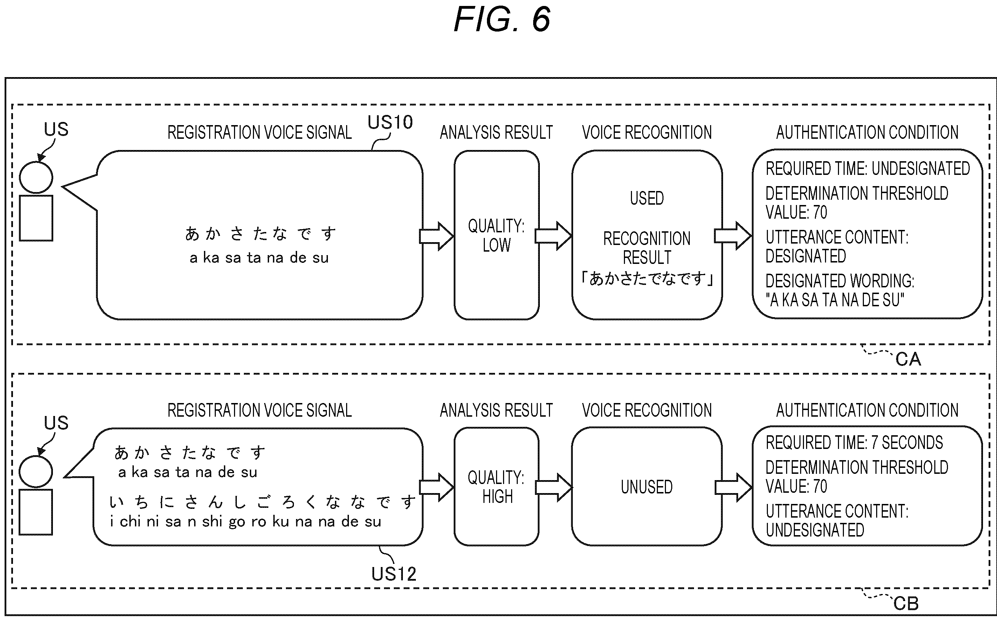

Next, an example of setting an utterance content as the authentication condition according to the quality of the registration voice signal will be described with reference to Fig. 6. Fig. 6 is a diagram illustrating an example of setting an utterance content as the authentication condition according to the quality of a registration voice signal. A quality determination method according to Fig. 6 is the same as the determination method according to Fig. 4.

The authentication condition setting unit 21F designates a wording for prompting the user US to utter based on the quality result. **In** the example illustrated in Fig. 6, when the quality is "low", the feature data extraction unit 21C executes voice recognition of the registration voice signal, analyzes the utterance content, and outputs the result of the voice recognition to the authentication condition setting unit 21F. The authentication condition setting unit 21F determines the wording to be designated for the user US based on the result of the voice recognition acquired from the feature data extraction unit 21C. When the quality is "low" and the authentication condition setting unit 21F designates the utterance content, the required time is not designated. When the quality is "high", no wording is designated for the user US. Even when the quality is "high", there may be wording designated for the user US, and a text shorter than that when the quality is "low" may be designated to improve convenience of the user. **In** the example illustrated in Fig. 6, when the quality is "high", the required time is set to 7 seconds as the authentication condition. The required time when the quality is "high" is an example, and is not limited to 7 seconds. **In** the example illustrated in Fig. 6, the determination threshold value is a constant value of 70 regardless of the quality. The determination threshold value may not be a constant value and may be changed depending on the quality.

The utterance content of the registration voice signal US10 is "a ka sa ta na de su". Since the quality of the registration voice signal US10 is "low", the feature data extraction unit 21C executes voice recognition of the registration voice signal US10, and the recognition result is "a ka sa ta na de su". The authentication condition setting unit 21F designates the wording as "a ka sa ta na de su" based on the recognition result acquired from the feature data extraction unit 21C. The authentication condition setting unit 21F does not designate the required time and sets the determination threshold value to 70.

The utterance content of the registration voice signal US12 is "a ka sa ta na de su i chi ni sa n shi go ro ku na na de su". Since the quality of the registration voice signal US12 is "high", the feature data extraction unit 21C does not execute voice recognition. The authentication condition setting unit 21F sets, as the authentication conditions, the required time to 7 seconds and the determination threshold value to 70. Since the quality of the registration voice signal US12 is "high", the authentication condition setting unit 21F does not designate the wording.

Accordingly, the authentication system 100 can perform authentication in a short time while maintaining high authentication accuracy by designating for the user US a wording based on the utterance content of the registration voice signal depending on the quality of the registration voice signal and having the user US utter the wording. Further, when the quality of the registration voice signal is high, no utterance content is designated, and thus the authentication system 100 can save the user US time.

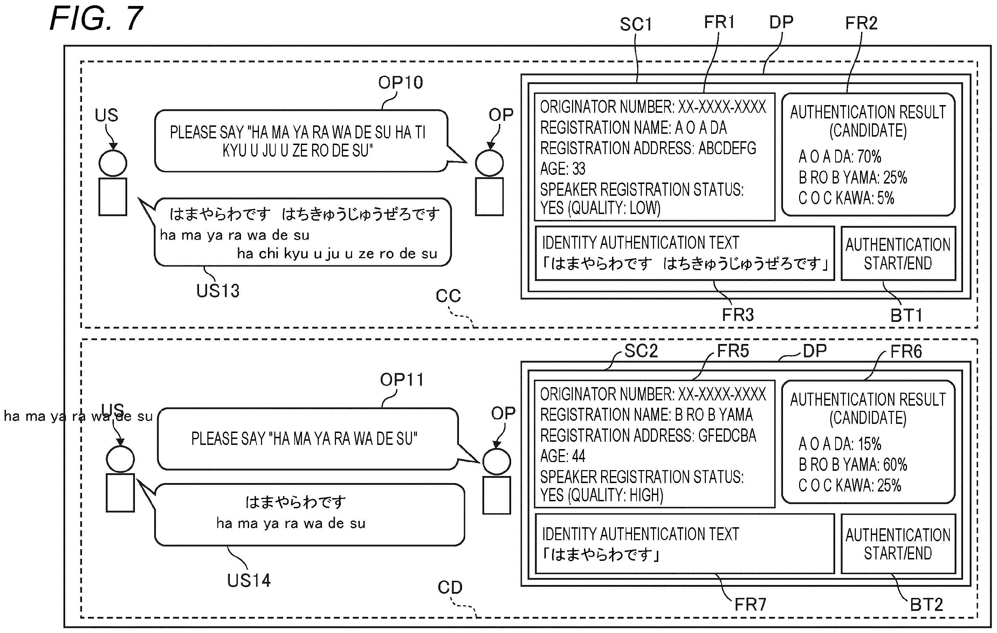

Next, an example in which an operator performs authentication of identity verification based on an identity verification text displayed on a screen will be described with reference to Fig. 7. Fig. 7 is a diagram illustrating an example in which an operator performs authentication of identity verification based on an authentication text displayed on a screen.

In Fig. 6, when the quality is "low", the authentication system 100 uses voice recognition to designate the wording to be uttered by the user US. Fig. 7 illustrates an example in which the wording to be uttered by the user US designated by the method according to Fig. 6 is displayed on a screen (hereinafter, referred to as an operator screen) that is viewed by the operator during authentication of the identity verification of the user US, and the operator OP has the user US utter the designated wording.

First, an example illustrated in a case CC will be described. A screen SC1 is an example of the operator screen displayed on the display DP.

In a frame FR1, registration information of a speaker is displayed. In the frame FR1, an "originator number", a "registration name", a "registration address", an "age", and a "speaker registration status" are displayed as the registration information of the speaker. The "originator number" is, for example, a telephone number. The "speaker registration status" indicates whether a registration voice signal is stored in the registered speaker database DB. When the registration voice signal is stored in the registered speaker database DB, the quality associated with the registration voice signal is also displayed. For example, in the frame FR1, the "originator number" is displayed as XX-XXXX-XXXX, the "registration name" is displayed as A o A da, the "registration address" is displayed as ABCDEFG, the "age" is displayed as 33, and the "speaker registration status" is displayed as yes (quality: low).

In a frame FR2, candidates considered to be the speaker are displayed as authentication results of the speaker. A probability that the speaker is the candidate is displayed beside the candidate. In the example of the frame FR2, the probability is indicated by a percentage, but is not limited thereto and may be displayed as "low, medium, high". In the frame FR2, the authentication results are displayed as "A o A da: 70%", "B ro B yama: 25%" and "C o C kawa: 5%".

In a frame FR3, a wording to be uttered by the speaker (hereinafter, referred to as an identity authentication text) is displayed. In the frame FR3, the identity authentication text is displayed as "ha ma ya ra wa de su ha ti kyu u ju u ze ro de su".

A button BT1 is a button for starting or stopping authentication.

The operator OP utters, based on the identity authentication text displayed on the frame FR3 of the screen SC1, an utterance voice OP10 "Please say 'ha ma ya ra wa de su ha ti kyu u ju u ze ro de su'". Based on the utterance of the operator OP, the user US utters an utterance voice US13 "ha ma ya ra wa de su ha ti kyu u ju u ze ro de su".

Next, an example illustrated in a case CD will be described. A screen SC2 is an example of the operator screen displayed on the display DP.

In a frame FR5, registration information of a speaker is displayed. In the frame FR5, the "originator number", the "registration name", the "registration address", the "age", and the "speaker registration status" are displayed as the registration information of the speaker. For example, in the frame FR5, the "originator number" is displayed as XX-XXXX-XXXX, the "registration name" is displayed as B ro B yama, the "registration address" is displayed as GFEDCBA, the "age" is displayed as 44, and the "speaker registration status" is displayed as yes (quality: high).

In a frame FR6, candidates considered to be the speaker are displayed as authentication results of the speaker. A probability that the speaker is the candidate is displayed beside the candidate. In the frame FR6, the authentication results are displayed as " A o A da: 15%", "B ro B yama: 60%" and "C o C kawa: 25%".

In a frame FR7, the identity authentication text is displayed as "ha ma ya ra wa de su". In the case CD, the quality is "high", and thus a wording shorter than that of the case CC in which the quality is "low" is designated as the identity verification text.

A button BT2 is a button for starting or stopping authentication.

The operator OP utters, based on the identity authentication text displayed on the frame FR7 of the screen SC2, an utterance voice OP11 "Please say 'ha ma ya ra wa de su'". Based on the utterance of the operator OP, the user US utters an utterance voice US14 "ha ma ya ra wa de su".

In Fig. 7, the operator OP reads out the identity authentication text displayed on the operator screen and has the user US utter the identity authentication text, but the identity authentication text may be played by an automated voice to have the user US utter the identity authentication text.

Accordingly, the authentication system 100 can perform authentication without the user US and the operator OP having to worry about the utterance length. When the quality of the registration voice signal is high, the authentication system 100 can perform authentication by designating a short wording for the user US, thereby reducing the time required for authentication. When the quality of the registration voice signal is low, the authentication system 100 can maintain high authentication accuracy by designating for the user US a wording longer than that when the quality is high, thereby preventing authentication failure or the need to retry.

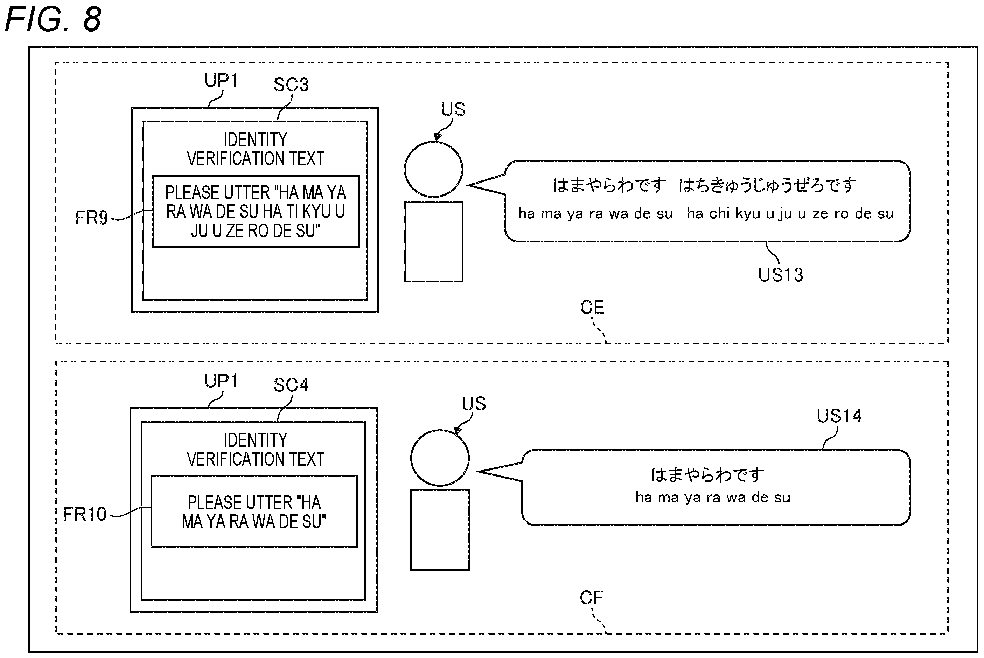

Next, an example of performing authentication of identity verification based on an identity verification text displayed on the user-side communication terminal will be described with reference to Fig. 8. Fig. 8 is a diagram illustrating an example of performing authentication of identity verification based on an identity verification text displayed on the user-side communication terminal.

First, an example illustrated in a case CE will be described. The case CE is an example in which the quality of the registration voice signal is low. A screen SC3 is an example of a screen displayed on the user-side communication terminal UP1.

The screen SC3 displays "Please utter the identity verification text: ha ma ya ra wa de su ha ti kyu u ju u ze ro de su". A frame FR9 displays "ha ma ya ra wa de su ha ti kyu u ju u ze ro de su" as the identity verification text, and the displayed text differs depending on the user US.

The user US views the content displayed on the screen SC3 and utters the utterance voice US13 "ha ma ya ra wa de su ha ti kyu u ju u ze ro de su".

Next, an example illustrated in a case CF will be described. The case CF is an example in which the quality of the registration voice signal is high. A screen SC4 is an example of a screen displayed on the user-side communication terminal UP1.

The screen SC4 displays "Please utter the identity verification text: ha ma ya ra wa de su". In a frame FR10, the identity verification text is displayed as "ha ma ya ra wa de su".

The user US views the content displayed on the screen SC4 and utters the utterance voice US14 "ha ma ya ra wa de su".

Accordingly, the authentication system 100 can perform authentication without the user US having to worry about the utterance length. In addition, the authentication system 100 can perform the authentication of the user US unmanned without the involvement of a person such as the operator OP.

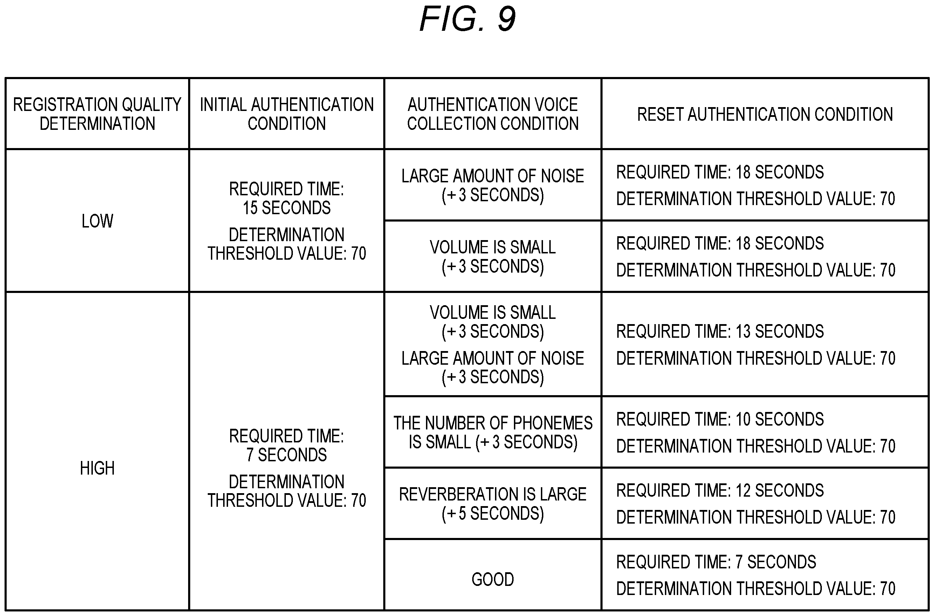

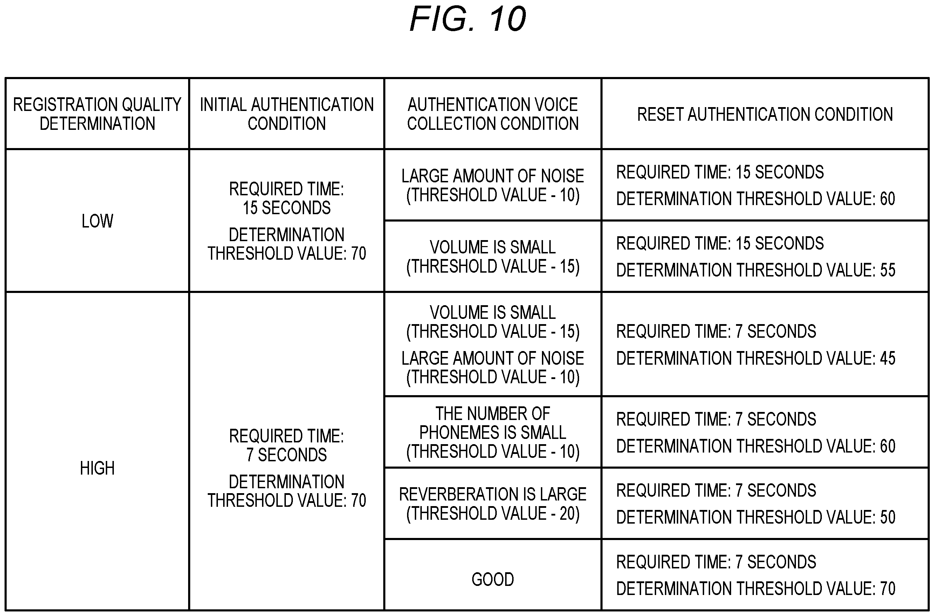

Next, examples of resetting the authentication conditions based on a measurement result of the voice collection condition during authentication after the authentication conditions are set will be described with reference to Figs. 9 and 10. Fig. 9 is a diagram illustrating an example of resetting the required time of the authentication conditions based on a measurement result of the voice collection condition during authentication after the authentication conditions are set. Fig. 10 is a diagram illustrating an example of resetting a threshold value of the authentication conditions based on the measurement result of the voice collection condition during authentication after the authentication conditions are set.

The authentication voice collection condition measurement unit 21G measures, as the voice collection condition during authentication (hereinafter, referred to as authentication voice collection condition), the noise, the volume, the degree of reverberation of the utterance voice signal collected during authentication, or the number of phonemes included in the utterance voice signal. Figs. 9 and 10 each illustrate an example in which the authentication conditions are reset according to the measured authentication voice collection condition after the authentication conditions are once (hereinafter, referred to as initial authentication conditions).

When the noise of the utterance voice signal is equal to or larger than a predetermined value related to the noise, that is, when there is a large amount of noise, the authentication condition setting unit 21F sets the required time to be longer by 3 seconds as the authentication condition.

When the volume of the utterance voice signal is less than a predetermined value related to the volume, that is, when the volume is small, the authentication condition setting unit 21F sets the required time to be longer by 3 seconds as the authentication condition.

When the number of phonemes of the utterance voice signal is less than a predetermined value related to the number of phonemes, that is, when the number of phonemes is small, the authentication condition setting unit 21F sets the required time to be longer by 3 seconds as the authentication condition.

When the reverberation of the utterance voice signal is equal to or larger than a predetermined value related to the reverberation, that is, when the reverberation is large, the authentication condition setting unit 21F sets the required time to be longer by 5 seconds as the authentication condition.

The lengths of the required time lengthened in relation to the noise, the volume, the number of phonemes, and the reverberation are examples, and are not limited thereto.

When the quality of the utterance voice signal is "low", the initial authentication conditions include a required time of 15 seconds and a determination threshold value of 70. The initial authentication conditions are examples, and are not limited thereto. When there is a large amount of noise as the authentication voice collection condition, the authentication condition setting unit 21F sets the required time to be longer by 3 seconds. As a result, the reset authentication conditions include a required time of 18 seconds and a determination threshold value of 70. When the volume is small as the authentication voice collection condition, the authentication condition setting unit 21F sets the required time to be longer by 3 seconds. As a result, the reset authentication conditions includes a required time of 18 seconds and a determination threshold value of 70.

When the quality of the utterance voice signal is "high", the initial authentication conditions include a required time of 7 seconds and a determination threshold value of 70. The initial authentication conditions are examples, and are not limited thereto. When there is a large amount of noise and the volume is small as the authentication voice collection condition, the authentication condition setting unit 21F sets the required time to be longer by 6 seconds in total. As a result, the reset authentication conditions include a required time of 13 seconds and a determination threshold value of 70. When the number of phonemes is small as the authentication voice collection condition, the authentication condition setting unit 21F sets the required time to be longer by 3 seconds. As a result, the reset authentication conditions include a required time of 10 seconds and a determination threshold value of 70. When the reverberation is large as the authentication voice collection condition, the authentication condition setting unit 21F sets the required time to be longer by 5 seconds. As a result, the reset authentication conditions include a required time of 12 seconds and a determination threshold value of 70. If the authentication voice collection conditions are good, the authentication conditions are the same as the initial authentication conditions.

Next, the example of resetting the threshold value of the authentication conditions based on a measurement result of the voice collection condition during authentication after the authentication conditions are set will be described with reference to Fig. 10.

When the noise of the utterance voice signal is equal to or larger than the predetermined value related to the noise, that is, when there is a large amount of noise, the authentication condition setting unit 21F lowers the determination threshold value by 10 as the authentication condition.

When the volume of the utterance voice signal is less than the predetermined value related to the volume, that is, when the volume is small, the authentication condition setting unit 21F lowers the determination threshold value by 15 as the authentication condition.

When the number of phonemes of the utterance voice signal is less than the predetermined value related to the number of phonemes, that is, when the number of phonemes is small, the authentication condition setting unit 21F lowers the determination threshold value by 10 as the authentication condition.

When the reverberation of the utterance voice signal is equal to or larger than the predetermined value related to the reverberation, that is, when the reverberation is large, the authentication condition setting unit 21F lowers the determination threshold value by 20 as the authentication condition.

The values of the determination threshold value lowered in relation to the noise, the volume, the number of phonemes, and the reverberation are examples, and are not limited thereto.

When the quality of the utterance voice signal is "low", the initial authentication conditions include a required time of 15 seconds and a determination threshold value of 70. The initial authentication conditions are examples, and are not limited thereto. When there is a large amount of noise as the authentication voice collection condition, the authentication condition setting unit 21F lowers the determination threshold value by 10. As a result, the reset authentication conditions include a required time of 15 seconds and a determination threshold value of 60. When the volume is small as the authentication voice collection condition, the authentication condition setting unit 21F lowers the determination threshold value by 15. As a result, the reset authentication conditions include a required time of 15 seconds and a determination threshold value of 55.

When the quality of the utterance voice signal is "high", the initial authentication conditions include a required time of 7 seconds and a determination threshold value of 70. The initial authentication conditions are examples, and are not limited thereto. When there is a large amount of noise and the volume is small as the authentication voice collection condition, the authentication condition setting unit 21F lowers the determination threshold value by 25 in total. As a result, the reset authentication conditions include a required time of 7 seconds and a determination threshold value of 45. When the number of phonemes is small as the authentication voice collection condition, the authentication condition setting unit 21F lowers the determination threshold value by 10. As a result, the reset authentication conditions include a required time of 7 seconds and a determination threshold value of 60. When the reverberation is large as the authentication voice collection condition, the authentication condition setting unit 21F lowers the determination threshold value by 20. As a result, the reset authentication conditions include a required time of 7 seconds and a determination threshold value of 50. If the authentication voice collection conditions are good, the authentication conditions are the same as the initial authentication conditions.

Accordingly, the authentication system 100 can perform highly accurate authentication by lengthening the required time, lowering the determination threshold value, or both when the voice collection conditions during authentication are poor, regardless of the quality of the registration voice signal.

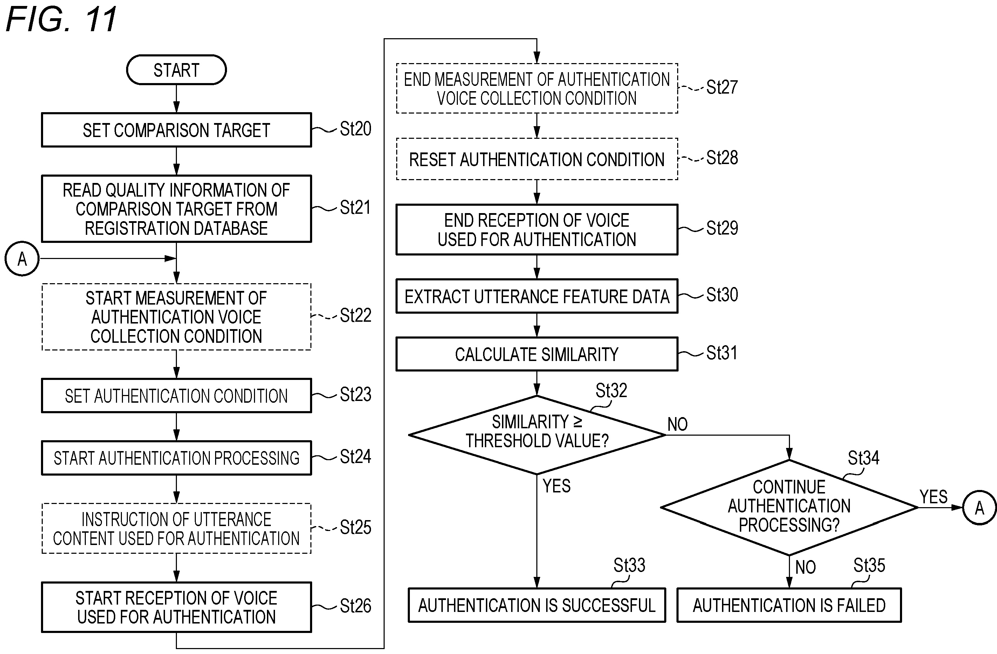

Next, processing related to authentication of a speaker will be described with reference to Fig. 11. Fig. 11 illustrates a flowchart of processing related to authentication of a speaker. Each processing illustrated in Fig. 11 is executed by the processor 21.

When executing authentication for identifying a speaker who is an authentication target person, the comparison target setting unit 21D sets a person used for authentication among a plurality of persons registered in the registered speaker database DB (St20).

The comparison target setting unit 21D acquires information related to the quality of the registration voice signal of the person who is a comparison target set in the processing of step St20 from the registered speaker database DB (St21). The comparison target setting unit 21D outputs the acquired information to the authentication condition setting unit 21F. The comparison target setting unit 21D acquires the registration feature data of the registration voice signal of the person who is the comparison target from the registered speaker database DB, and outputs the registration feature data to the similarity calculation unit 21E.

The authentication voice collection condition measurement unit 21G measures the authentication voice collection condition (St22). The processing of step St22 may be omitted from the processing of the flowchart illustrated in Fig. 11.

The authentication condition setting unit 21F sets the authentication condition based on the information related to the quality acquired from the comparison target setting unit 21D in the processing of step St21 (St23).

The processor 21 transmits a signal for starting the authentication processing to the communication unit 20 (St24). The communication unit 20 transmits an instruction for starting the authentication to the operator-side communication terminal OP1.

The authentication condition setting unit 21F acquires the registration feature data of the registration voice signal of the speaker from the comparison target setting unit 21D. The authentication condition setting unit 21F designates, based on the acquired registration feature data, the wording of the utterance content used for authentication (St25). The processing of step St25 may be omitted from the processing of the flowchart illustrated in Fig. 11.

The processor 21 starts receiving the utterance voice signal used for authentication (St26). The processor 21 outputs the acquired utterance voice signal to the feature data extraction unit 21C.

The authentication voice collection condition measurement unit 21G measures the authentication voice collection condition (St27). The authentication voice collection condition measurement unit 21G outputs information on the measured authentication voice collection condition to the authentication condition setting unit 21F. The processing of step St27 may be omitted from the processing of the flowchart illustrated in Fig. 11.

The authentication condition setting unit 21F resets the authentication condition based on the authentication voice collection condition acquired in the processing of step St27 (St28). The processor 21 acquires an utterance voice signal based on the authentication condition reset by the authentication condition setting unit 21F in the processing of step St28. The processor 21 outputs the acquired utterance voice signal to the feature data extraction unit 21C. The processing of step St28 may be omitted from the processing of the flowchart illustrated in Fig. 11.

The processor 21 transmits, to the communication unit 20, a signal for ending the authentication processing, that is, for ending the reception of the utterance voice signal used for the authentication (St29). The communication unit 20 transmits an instruction for ending the authentication to the operator-side communication terminal OP1.

The feature data extraction unit 21C extracts the utterance feature data of the utterance voice signal acquired in the processing of step St26 or the processing of step St28 (St30). The feature data extraction unit 21C outputs the extracted utterance feature data to the similarity calculation unit 21E.

The similarity calculation unit 21E calculates the similarity based on the registration feature data acquired in step St21 and the utterance feature data acquired in the processing of step St30 (St31).

The similarity calculation unit 21E determines whether the similarity calculated in the processing of step St31 is equal to or larger than a predetermined threshold value (St32). When determining that the similarity is equal to or larger than the predetermined threshold value (St32, YES), the similarity calculation unit 21E outputs a signal indicating that the authentication of the identity verification of the speaker is successful to the communication unit 20, the display I/F 23, or both of them.

When determining that the similarity is less than the predetermined threshold value (St32, NO), the similarity calculation unit 21E determines whether to continue the authentication processing (St34).

When the similarity calculation unit 21E determines to continue the authentication processing (St34, YES), the processing of the processor 21 returns to the processing of step St22. When the processing of step St22 is omitted, the processing of the processor 21 returns to the processing of step St23.

When determining not to continue the authentication processing (St35, NO), the similarity calculation unit 21E outputs a signal indicating that the authentication of the identity verification of the speaker is failed to the communication unit 20, the display I/F 23, or both of them.

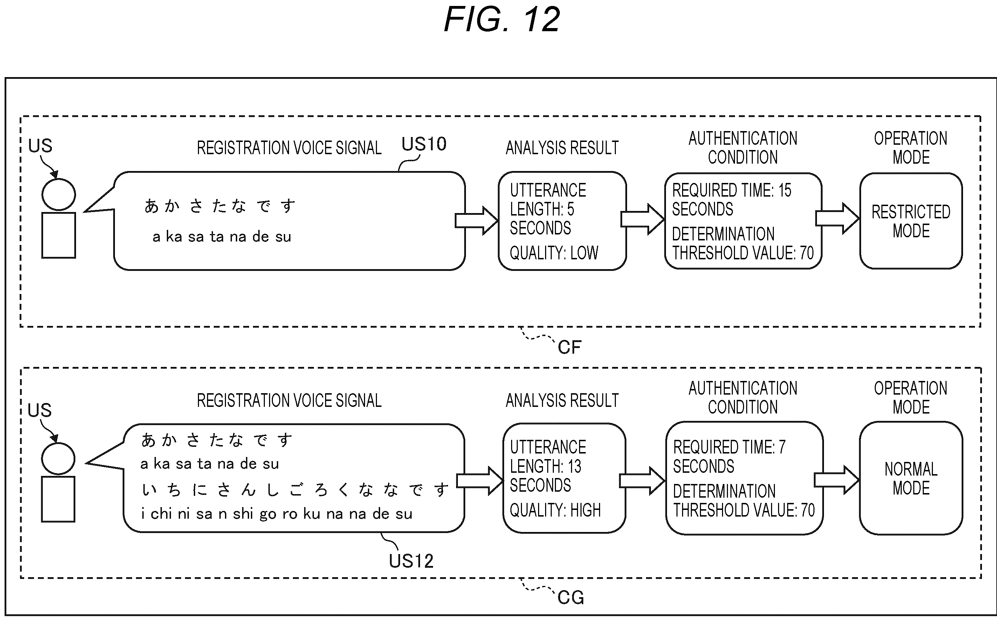

Next, an example of setting a restriction on an operation after a successful authentication depending on the quality of the registration voice signal will be described with reference to Fig. 12. Fig. 12 is a diagram illustrating an example of setting a restriction on an operation after a successful authentication depending on the quality of the registration voice signal.

The registration voice signal US10 and the registration voice signal US12 illustrated in Fig. 12 are similar to the registration voice signal US10 and the registration voice signal US12 illustrated in Fig. 4. Therefore, regarding Fig. 12, the description until the authentication condition is set is omitted.

If the authentication system 100 is installed in, for example, a bank ATM, the operation restriction setting unit 21H may impose, based on the quality of the registration voice signal, restrictions on operations (for example, deposit) that may occur after the authentication of the identity verification of the speaker is successful. Although an example in which the authentication system 100 is installed is not limited to a bank ATM, for convenience of description, it is assumed that the authentication system 100 is installed in a bank ATM.

A case CG is an example of authentication when the quality of the registration voice signal is low. In the case CG, since the quality of the registration voice signal is low, the operation restriction setting unit 21H imposes restrictions on an operation mode and causes the processor 21 to operate in a restricted mode. In the restricted mode, for example, only checking the balance of an account and deposit are permitted. The operations permitted in the restricted mode are examples and are not limited thereto.

A case CH is an example of authentication when the quality of the registration voice signal is high. In the case CH, since the quality of the registration voice signal is high, the operation restriction setting unit 21H does not impose restrictions on the operation mode and causes the processor 21 to operate in a normal mode. In the normal mode, all operations are permitted, such as checking the balance of an account, deposit, remittance, or transfer. The operations permitted in the normal mode are examples and are not limited thereto.

Accordingly, when the quality of the registration voice signal is low, the authentication system 100 can reduce the risk of the erroneous determination by setting operation restrictions on a machine in which the authentication system 100 is installed.

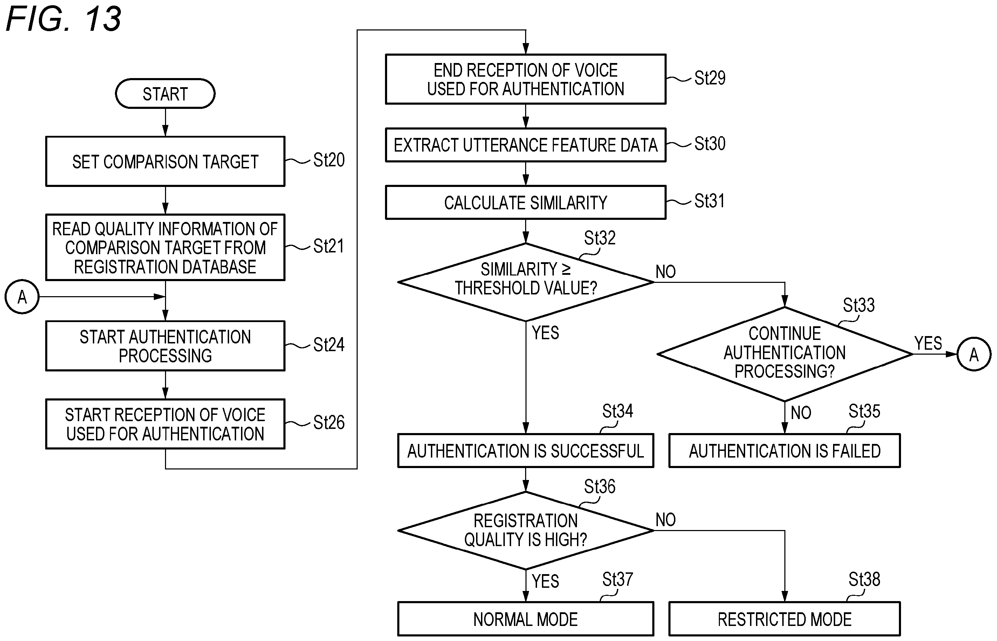

Next, processing of setting an operation restriction based on the quality of the registration voice signal will be described with reference to Fig. 13. Fig. 13 illustrates a flowchart of processing of setting an operation restriction based on the quality of the registration voice signal. Each processing in the flowchart according to Fig. 13 is executed by the processor 21. In the processing of the flowchart illustrated in Fig. 13, the processing the same as that in the flowchart illustrated in Fig. 11 is denoted by the same reference numerals, and the description thereof will be omitted.

If the authentication related to the identity verification of the speaker is successful in the processing of step St34, the operation restriction setting unit 21H determines whether the quality of the registration voice signal is high (St36).

When determining that the quality of the registration voice signal is high (St36, YES), the operation restriction setting unit 21H sets the operation mode to the normal mode (St37).

When determining that the quality of the registration voice signal is low (St36, NO), the operation restriction setting unit 21H sets the operation mode to the restricted mode (St38).

As described above, an authentication system according to the present embodiment (for example, the authentication system 100) includes an acquisition unit (for example, the user-side communication terminal UP1) configured to acquire a voice signal of an utterance voice of a speaker. The authentication system includes a detection unit (for example, the utterance section detection unit 21A) configured to detect a first utterance section during which the speaker is uttering from the acquired voice signal and a second utterance section during which the speaker is uttering from voice signals of a plurality of speakers registered in a database. The authentication system includes a determination unit (for example, the authentication condition setting unit 21F) configured to collate a first voice signal of the first utterance section with a second voice signal of the second utterance section and determine an authentication condition for authentication using the first voice signal based on a length of the second voice signal of the second utterance section or the number of syllables included in the second utterance section. The authentication system includes an authentication unit (for example, the similarity calculation unit 21E) configured to authenticate the speaker based on the determined authentication condition.

Accordingly, the authentication system according to the present embodiment can determine, based on the utterance length or the number of syllables of the registration voice signal, the authentication condition required of a user during authentication, thereby changing the authentication condition for each user. Accordingly, the authentication system can determine the utterance time during authentication in accordance with a total time length of the utterance voice of the user acquired during registration, and improve convenience of the user.

The authentication unit of the authentication system according to the present embodiment is configured to start the authentication when a length of the second utterance section is equal to or larger than a first predetermined value and a length of the first utterance section is equal to or larger than a second predetermined value. The authentication unit is configured to start the authentication when the length of the second utterance section is less than the first predetermined value and the length of the first utterance section is equal to or larger than a third predetermined value that is larger than the second predetermined value. Accordingly, the authentication system requires the user to utter for a number of seconds that is estimated to be sufficient for determination during authentication, based on the quality depending on the utterance length of the registration voice signal, thereby preventing the user from uttering longer than necessary or from failing authentication due to too short an utterance. Accordingly, the authentication system 100 can determine the utterance time during authentication in accordance with a total time length of the utterance voice of the user acquired during registration, and improve convenience of the user.

The authentication unit of the authentication system according to the present embodiment is configured to start the authentication when the number of syllables included in the second utterance section is equal to or larger than a fourth predetermined value and a length of the first utterance section is equal to or larger than a second predetermined value. The authentication unit is configured to start the authentication when the number of syllables included in the second utterance section is less than the fourth predetermined value and the length of the first utterance section is equal to or larger than a third predetermined value that is larger than the second predetermined value. Accordingly, the authentication system requires the user to utter for a number of seconds that is estimated to be sufficient for stability during authentication, based on the quality based on the number of syllables of the registration voice signal, thereby preventing the user from uttering longer than necessary or from failing authentication due to too short an utterance. Accordingly, the authentication system can improve convenience of the user during authentication.

The authentication unit of the authentication system according to the present embodiment is configured to start the authentication when a length of the second utterance section is equal to or larger than a first predetermined value, the number of syllables included in the second utterance section is equal to or larger than a fourth predetermined value, and a length of the first utterance section is equal to or larger than a second predetermined value. The authentication unit is configured to start the authentication when the length of the second utterance section is less than the first predetermined value or the number of syllables included in the second utterance section is less than the fourth predetermined value, and the length of the first utterance section is equal to or larger than a third predetermined value that is larger than the second predetermined value. Accordingly, the authentication system can determine the utterance length required of the user during authentication, according to the utterance length and the number of syllables of the registration voice signal. The authentication system can determine the authentication conditions based on the utterance length and the number of syllables, thereby improving convenience of the user and enabling more accurate authentication.

When a length of the second utterance section is less than a first predetermined value, the determination unit of the authentication system according to the present embodiment determines a text that prompts the speaker to utter from an utterance content included in the voice signal of the second utterance section. Accordingly, the authentication system can perform authentication in a short time while maintaining high authentication accuracy by designating for the user a wording based on the utterance content of the registration voice signal depending on the utterance length of the registration voice signal and having the user utter the wording. Further, when the utterance length of the registration voice signal is sufficiently long, no utterance content is designated, and thus the authentication system can save the user US time.

The authentication system according to the present embodiment further includes a first display unit (for example, the display DP) configured to display a screen to be referenced by an operator during the authentication, and the determination unit causes the first display unit to display the text. Accordingly, the authentication system can perform authentication without the user and the operator having to worry about the utterance length. When the quality of the registration voice signal is high, the authentication system can perform authentication by designating a short wording for the user, thereby reducing the time required for authentication. When the quality of the registration voice signal is low, the authentication system can maintain high authentication accuracy by designating for the user a wording longer than that when the quality is high, thereby preventing authentication failure or the need to retry.

The authentication system according to the present embodiment further includes a second display unit (for example, the user-side communication terminal UP1) configured to display a screen to be referenced by the speaker during the authentication, and the determination unit causes the second display unit to display the text. The authentication system can perform authentication without the user having to worry about the utterance length. In addition, the authentication system can perform the authentication of the user unmanned without the involvement of a person such as the operator OP.

The authentication system according to the present embodiment further includes a measurement unit configured to measure at least one of noise, volume, the number of phonemes, and reverberation magnitude of the voice signal of the first utterance section, and the determination unit is configured to set the authentication condition based on a measurement result acquired from the measurement unit. Accordingly, the authentication system can perform highly accurate authentication by lengthening the required time, lowering the determination threshold value, or both when the voice collection conditions during authentication are poor, regardless of the quality of the registration voice signal.

The authentication condition in the authentication system according to the present embodiment is a length of the voice signal or a determination threshold value related to authentication of identity verification of the speaker. Accordingly, the authentication system can designate an utterance length to be designated for the user according to the quality of the registration voice signal of each user, thereby improving convenience for the user. In addition, the authentication system can change the threshold value related to the determination based on the quality of the registration voice signal of the user, and can perform flexible authentication according to each user.

The authentication system according to the present embodiment further includes a restriction setting unit (for example, the operation restriction setting unit 21H) configured to set a restriction on an operation allowed to be performed by the speaker after the authentication when a length of the second utterance section is less than a first predetermined value. Accordingly, when the quality of the registration voice signal is low, the authentication system can reduce the risk of the erroneous determination by setting operation restrictions on a machine in which the authentication system is installed.

Although the embodiments have been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, constituent elements in the embodiment described above may be freely combined without departing from the gist of the invention.

The present application is based on Japanese Patent Application No. 2022-086892 filed on May 27, 2022, and the contents thereof are incorporated herein by reference.

### INDUSTRIAL APPLICABILITY

The technique of the present disclosure is useful as an authentication system and an authentication method that determine the utterance time during authentication in accordance with a total time length of the utterance voice of the user acquired during registration, and improve convenience of the user.

### REFERENCE SIGNS LIST

NW: network
UP1: user-side communication terminal
OP1: operator-side communication terminal
US: user
OP: operator
COM11, COM12, COM13, COM14: utterance voice
P1: authentication analysis device
DB: registered speaker database
DP: display
SC: authentication result screen
20: communication unit
21: processor
21A: utterance section detection unit
21B: registration quality determination unit
21C: feature data extraction unit
21D: comparison target setting unit
21E: similarity calculation unit
21F: authentication condition setting unit
21G: authentication voice collection condition measurement unit
22H: operation restriction setting unit
22: memory
22A: ROM
22B: RAM
23: display I/F
US10, US11, US12: registration voice signal
CA, CB, CC, CD, CE, CF, CG, CH: case
SC1, SC2, SC3, SC4: screen
FR1, FR2, FR3, FR4, FR5, FR6, FR7: frame
BT1, BT2: button
OP10, OP11, US13, US14: utterance voice

## Claims

1. An authentication system comprising:
an acquisition unit that acquires a voice signal of an utterance voice of a speaker;
a detection unit that detects a first utterance section during which the speaker is uttering from the acquired voice signal and a second utterance section during which the speaker is uttering from voice signals of a plurality of speakers registered in a database;
a determination unit that collates a first voice signal of the first utterance section with a second voice signal of the second utterance section and determines an authentication condition for authentication using the first voice signal based on a length of the second voice signal of the second utterance section or the number of syllables included in the second utterance section; and
an authentication unit that authenticates the speaker based on the determined authentication condition.

2. The authentication system according to claim 1, wherein
the authentication unit starts the authentication when a length of the second utterance section is equal to or larger than a first predetermined value and a length of the first utterance section is equal to or larger than a second predetermined value, and
the authentication unit starts the authentication when the length of the second utterance section is less than the first predetermined value and the length of the first utterance section is equal to or larger than a third predetermined value that is larger than the second predetermined value.

3. The authentication system according to claim 1, wherein
the authentication unit starts the authentication when the number of syllables included in the second utterance section is equal to or larger than a fourth predetermined value and a length of the first utterance section is equal to or larger than a second predetermined value, and
the authentication unit starts the authentication when the number of syllables included in the second utterance section is less than the fourth predetermined value and the length of the first utterance section is equal to or larger than a third predetermined value that is larger than the second predetermined value.

4. The authentication system according to claim 1, wherein
the authentication unit starts the authentication when a length of the second utterance section is equal to or larger than a first predetermined value, the number of syllables included in the second utterance section is equal to or larger than a fourth predetermined value, and a length of the first utterance section is equal to or larger than a second predetermined value, and
the authentication unit starts the authentication when the length of the second utterance section is less than the first predetermined value or the number of syllables included in the second utterance section is less than the fourth predetermined value, and the length of the first utterance section is equal to or larger than a third predetermined value that is larger than the second predetermined value.

5. The authentication system according to claim 1, wherein
when a length of the second utterance section is less than a first predetermined value, the determination unit determines a text that prompts the speaker to utter from an utterance content included in the voice signal of the second utterance section.

6. The authentication system according to claim 5, further comprising:
a first display unit that displays a screen to be referenced by an operator during the authentication, wherein
the determination unit causes the first display unit to display the text.

7. The authentication system according to claim 5, further comprising:
a second display unit that displays a screen to be referenced by the speaker during the authentication, wherein
the determination unit causes the second display unit to display the text.

8. The authentication system according to claim 5, further comprising:
a measurement unit that measures at least one of noise, volume, the number of phonemes, and reverberation magnitude of the voice signal of the first utterance section, wherein
the determination unit sets the authentication condition based on a measurement result acquired from the measurement unit.

9. The authentication system according to claim 8, wherein
the authentication condition is a length of the voice signal or a determination threshold value related to authentication of identity verification of the speaker.

10. The authentication system according to claim 1, further comprising:
a restriction setting unit that sets a restriction on an operation allowed to be performed by the speaker after the authentication when a length of the second utterance section is less than a first predetermined value.

11. An authentication method performed by one or more computers, the authentication method comprising:
acquiring a voice signal of an utterance voice of a speaker;
detecting a first utterance section during which the speaker is uttering from the acquired voice signal and a second utterance section during which the speaker is uttering from voice signals of a plurality of speakers registered in a database;
collating a first voice signal of the first utterance section with a second voice signal of the second utterance section;
determining an authentication condition for authentication using the first voice signal based on a length of the second voice signal of the second utterance section or the number of syllables included in the second utterance section; and
authenticating the speaker based on the determined authentication condition.
